# EUROPEAN PATENT APPLICATION

(11) **EP 2 455 168 A1**
(43) Date of publication of application: **23.05.2012**
(21) Application number: 11009213.7
(22) Date of filing: 21.11.2011
(51) Int. Cl.: B21C 23/01, B21B 45/04, B23Q 11/00, B30B 9/32

(54) **Milling system for aluminium plates to be rolled**

(30) Priority: 19.11.2010 IT MI20102147
(71) Applicant: Selema Srl, 20833 Giussano (IT)
(72) Inventor: Serafino, Cozzi, 20841 Carate Brianza (MB) (IT)

(57) **Abstract**

Milling system (10) for aluminium plates (90) to be rolled, able to smooth an aluminium plate (90), obtained through a metallurgic process, in order to make a subsequent rolling of the same in order to obtain aluminium coils, the milling system (10) producing aluminium scraps during the smoothing operation and comprising suction means (20) of the aluminium scraps and compaction means (50) of the aluminium scraps.

The compaction means (50) of the aluminium scraps comprise at least one pair of rolling rolls (60) able to plastically deform the aluminium scraps, such to deform them and transform the same in a single rough aluminium tape, easy to cut and transport.

## Description

The present invention refers to a milling system for aluminium plates to be rolled in order to obtain aluminum stripes of various thickness.

The aluminium plates to roll are obtained through a melting process with subsequent cooling, which determines the formation of an exterior layer containing impurities and oxides.

The aluminium plates to roll have very large sizes.

The presence of said exterior layer on the outer walls of the aluminium plates could determine a pollution and defects of the rolled strip obtained by the aluminium plates, and furthermore could determine an increase in wear of the rolling rolls, therefore it is necessary to remove the same through a milling system at high speed.

The milling system must remove great amounts of aluminium, for example from 7 to 15 mm of aluminium must be removed from each wall of each aluminium plate, in order to eliminate said exterior layer.

Hence the milling system produces a great quantities of aluminium scraps, which must be quickly removed in order to avoid the wrapping of the same onto a plurality of mills working a given aluminium plate.

A first disadvantage consists in that the aluminium scraps are very elastic and have a great mechanical resistance so that they tend to obstruct the evacuation ducts and to mutually wrap themselves so forming a set of balls very cumbersome and difficult to move.

Typically the aluminium scraps are ground and then evacuated in a duct in which is inserted a fan able to suck the same.

A first disadvantage is that the grinding is expensive, consumes a great amount of power, and also produces aluminium dusts which are dangerous, in particular when they contain magnesium, which is easily inflammable and can cause explosions.

Another disadvantage is that the aluminium scraps during their grinding often wrap in the grinding machine, causing sometimes a block of the same.

Another disadvantage is that the ground aluminium scraps pass through said fan and in particular through its blades, with the risk of its obstruction and so determining a great wear of its blades.

This determines a frequent maintenance and the periodical substitution of the worn blades.

Furthermore the aluminium scraps, when they are heated in a furnace for melting, having a great outer surface and a low thermal capacity and a great thermal conductivity, tend to rapidly reach very high temperatures, which burn a portion of the scraps, so determining an oxidation and a non-recyclable scrap, and producing at the same time thin dusts which pollute the air.

Another disadvantage is that the aluminium scraps often contain magnesium, which is easily flammable even at low temperatures, so making explosive and dangerous the aluminium dusts.

A purpose of the present invention is to realize a milling system for aluminium plates to be rolled, permitting to compact the aluminium scraps in a uniform way, so that they are easily transported and handled.

Another purpose is to realize a milling system for aluminium plates to be rolled, permitting to vary the compaction level of the aluminium scraps maintaining at the same time always uniform the compaction level.

Still another purpose is to provide a milling system for aluminium plates to be rolled which permit to reduce the dusts present in the scraps and which permit a recovery of the lubricant.

Still another purpose is to provide a milling system for aluminium plates to be rolled which permit to avoid a wear of the blades of the fan and to reduce the need for a maintenance.

Further purpose is to provide a milling system for aluminium plates to be rolled which is cheap and provides a capacity of greatly reducing the polluting emissions.

These aims according to the present invention are reached by realizing a milling system for aluminium plates to be rolled according to claim 1.

Further features of the invention are pointed out in the following claims.

The features and advantages of a milling system for aluminium plates to be rolled according to the present invention will be more evident from the following exemplary and non limitative description , with reference to the annexed schematic drawings, in which:

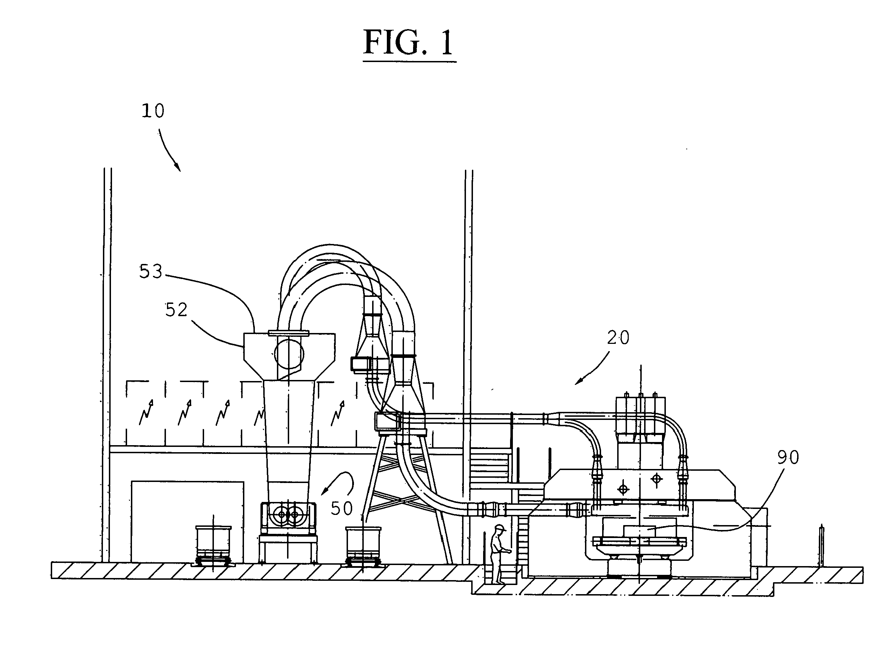

figure 1 is a partially sectioned and front elevation schematic view of a preferred embodiment of a milling system for aluminium plates to be rolled according to the present invention;

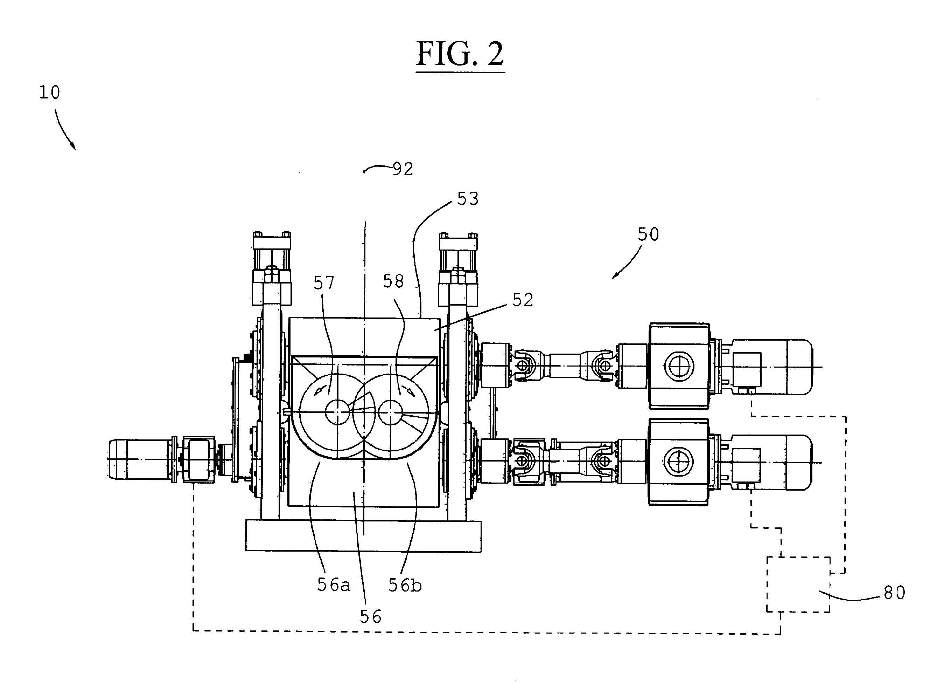

figure 2 is a partially sectioned rear elevation view of a detail of figure 1;

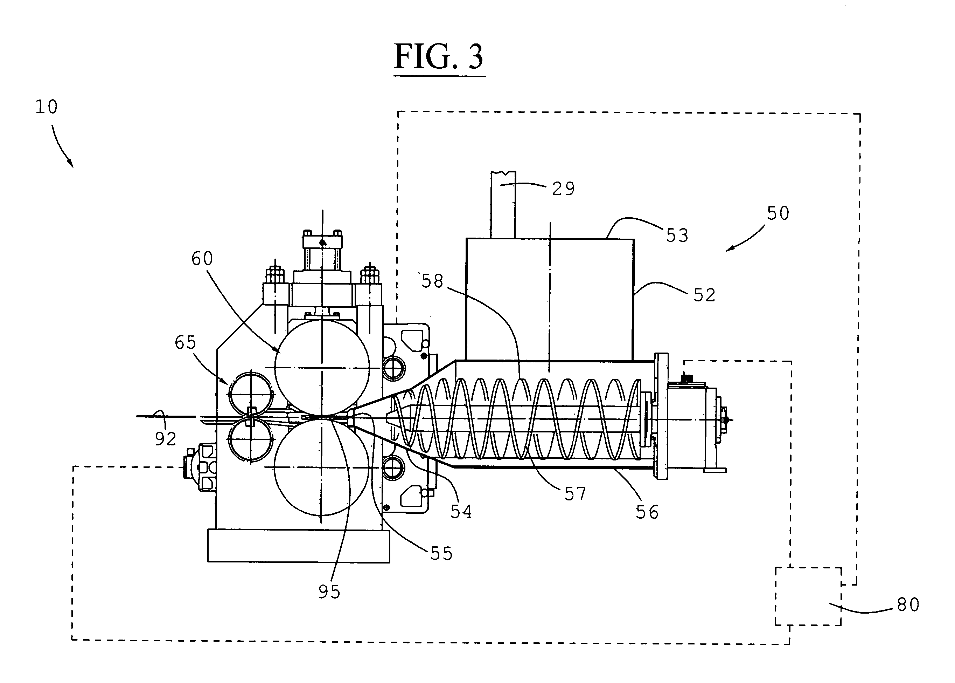

figure 3 is a partially sectioned right side elevation view of the detail of figure 2;

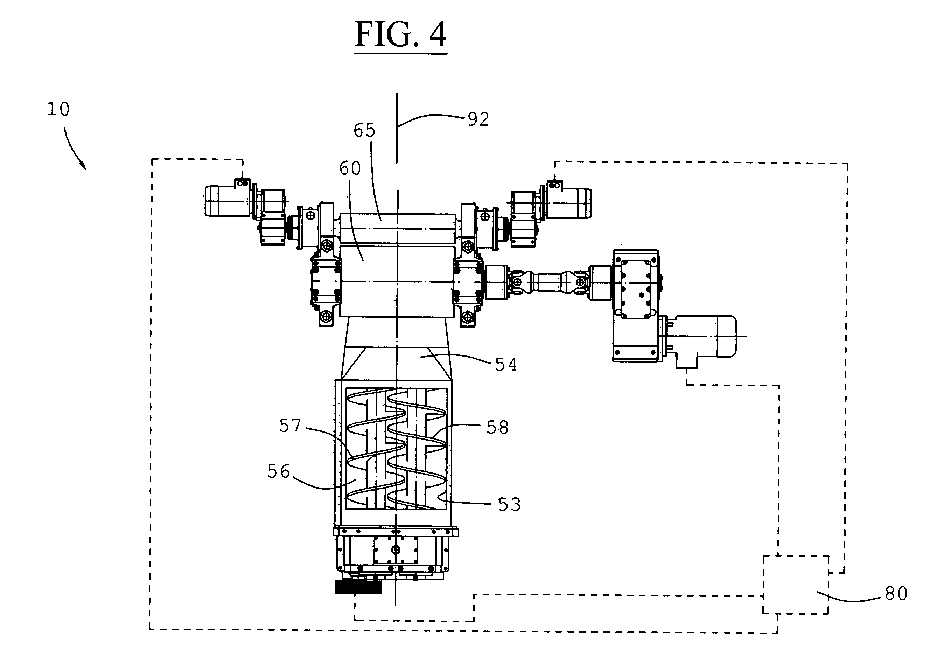

figure 4 is a partially sectioned top view of the detail of figure 2.

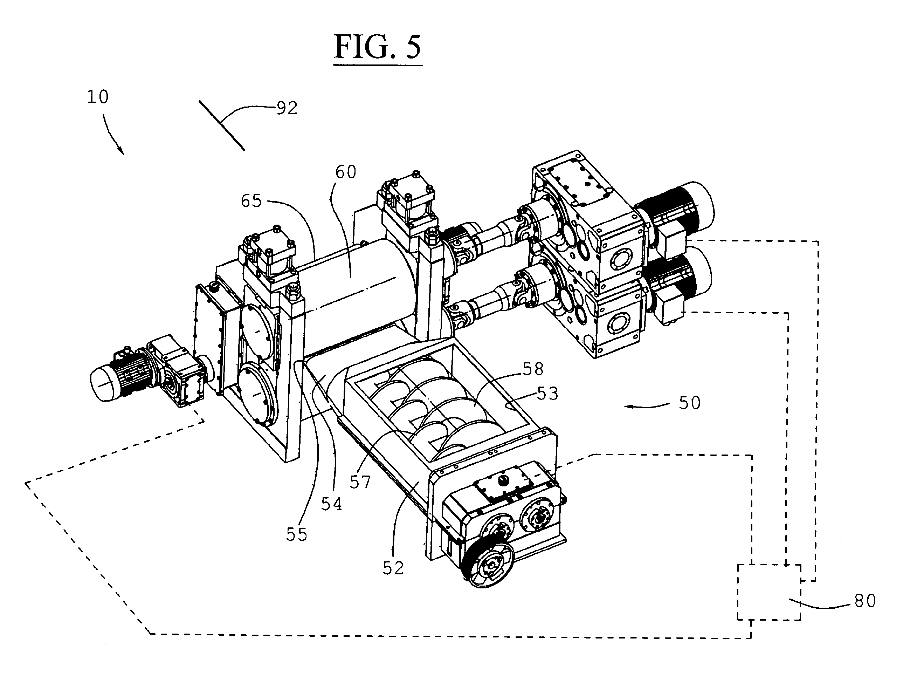

figure 5 is a perspective, partially sectioned and right side elevation view of the detail of figure 2;

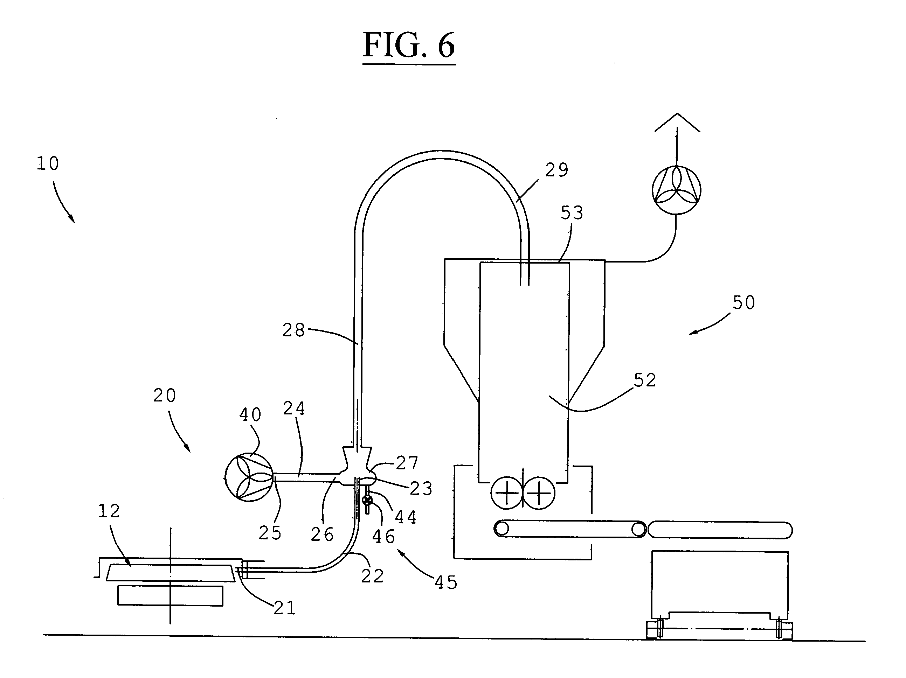

figure 6 is a schematic, partially sectioned rear elevation view of a preferred embodiment of a milling system for aluminium plates to be rolled according to the present invention.

With reference to the figures, it is shown a milling system 10 for aluminium plates 90 to be rolled which is able to smooth an aluminium plate 90 obtained by means of a metallurgical process for a subsequent rolling of the same in order to obtain aluminium coils, wherein said milling system 10 produces aluminium scraps during said smoothing operation.

Said milling system 10 comprises suction means 20 of the aluminium scraps and compacting means 50 of the aluminium scraps.

According to the present invention, said compacting means 50 of the aluminium scraps comprise at least a pair of rolling rolls 60, able to plastically deform the aluminium scraps, in order to plastically deform them and transform the same in a single rough tape made of aluminium scraps made of mutually aggregated aluminium scraps, which is easy to cut and transport.

Advantageously this permits to provide very easily to cut and transport of the aluminium scraps for a subsequent recycling of the same.

Preferably, said milling system 10 also comprises a rotary transversal shears 65 coupled and positioned along a longitudinal direction 92 in series with said at least one pair of rolling rolls 60, said rotary transversal shears 65 being able to cut and divide said single rough aluminium tape in a plurality of rough aluminium plates, compact and easily movable.

Advantageously, this permits to continuously and directly cut said single rough aluminium tape in a plurality of rough aluminium plates, extremely compact and easily movable, so advantageously reducing at a minimum the power consumption and therefore the transformation cost.

Furthermore, in this way said plurality of rough aluminium plates are easily stackable, so reducing at a minimum the volume occupied and so being easily transportable also for example through the common handling systems.

Preferably, said compacting means 50 comprise a collecting box 52 for the aluminium scraps, provided with an upper opening 53, inside which at least one feeding duct 29 of the aluminium scraps is partially inserted, from which said aluminium scraps come out.

Preferably said collecting box 52 comprises a tapered portion 54 of a side wall and having a second opening 55 substantially orthogonal to said longitudinal direction 92 which is also positioned in proximity of said at least two rolling rolls 60.

In particular, said second opening 55 is substantially centred with a feeding plane 95 of said at least two rolling rolls 60.

Advantageously, this permits a great reliability as it permits to concentrate said aluminium scraps near said at least two rolling rolls 60, which in this way are able to deform them plastically in said single rough aluminium tape, and at the same time they are able to pull said aluminium scraps towards said rotary transversal shears 65, so avoiding an obstruction of said collecting box 52 and of said second opening 55.

Preferably, said collecting box 52 comprises at least two conveying augers 57 and 58 which are coupled and positioned side by side near a bottom portion 56 of said collecting box 52, wherein furthermore at least said two conveying augers 57 e 58 rotate in an opposite way one with respect to the other, and furthermore each of said at least two conveying augers 57 and 58 rotate respect to a correspondent axis which is substantially parallel to said longitudinal direction 92.

Preferably said at least two conveying augers 57 and 58 have a variable diameter, which in particular reduces itself by moving towards said second opening 55, and also they have respectively a variable-pitch propeller, which wraps on each conveying auger according to the correspondent rotation direction of the same, in order to push said aluminium scraps towards said second opening 55 and at the same time to make a first compaction of said aluminium scraps coming from at least one feeding duct 29 of the scraps.

Advantageously, this permits to compact said aluminium scraps and at the same time to push the same towards said second opening 55.

Preferably said bottom portion 56 has a section orthogonal to said longitudinal direction 92 which is substantially "3"-shaped and also has a substantially cusp-shaped protuberance, which extends inside said collecting box 52 along a direction substantially parallel to said longitudinal direction 92.

Advantageously, this reduces the problem of the accumulation of aluminium scraps on the bottom 56 of said collecting box 52.

Preferably, said bottom portion 56 comprises a first housing 56a and a second housing 56b respectively for said at least two conveying augers 57 and 58.

Advantageously, this greatly reduces an accumulation of aluminium in said collecting box 52, as the free bottom space 56 is reduced at a minimum.

Preferably said milling system 10 comprises electronic control and actuation means 80 linked to said at least one pair of rolling rolls 60, to said rotary transversal shears 65 and to said at least two conveying augers 57 and 58, a plurality of force transducers which are linked to said at least two conveying augers 57 and 58 and to said electronic control and actuation means 80.

Preferably said milling system 10 comprises a plurality of load cells connected to said at least two conveying augers 57 and 58 and to said electronic control and actuation means 80, wherein furthermore in particular said milling system 10 comprises electric actuation means connected with said at least one pair of rolling rolls 60, with said rotary transversal shears 65 and with said at least two conveying augers 57 and 58.

Preferably, said electronic control and actuation means 80 vary the rotation speed and the distance among the rolls of said at least one pair of rolling rolls 60 and also vary the rotation speed of said rotary transversal shears 65 and also the rotation speed of said at least two conveying augers 57 and 58 maintaining a constant and uniform compaction level of said single rough aluminium tape and consequently also of said plurality of rough aluminium plates.

Advantageously, this permits to maximize the recycling of said aluminium scraps, so that avoiding a clogging of the collecting box 52 and at the same time maintaining a constant compaction level of said single rough aluminium tape and of said plurality of rough aluminium plates, it is possible to reduce at a minimum the percentage of aluminium scraps burnt during a subsequent melting of the same.

In fact, a great and constant compaction level permits to minimize the outer surface of heat exchange, so to have a great thermal capacity of said plurality of rough aluminium plates, so permitting a more gradual increase of the temperature of the same during the melting process.

Advantageously this greatly reduces the quantity of dusts emitted in the air during the melting process of said plurality of rough aluminium, so reducing at a minimum the pollution from thin dusts such as for example PM10.

Advantageously said control and actuation electronic means also permit to vary the compaction level of said plurality of rough aluminium plates according to the type of the furnace used for the melting of the same, in order to optimize the melting and recycling of the aluminium scraps same, in such a way to reducing at a minimum the scraps and the emissions.

Preferably said suction means 20 of the aluminium scraps comprise at least one first evacuation duct 22 of the aluminium scraps having a second end 23 and a first end 21 positioned in proximity of a frontal mill 12 able to smooth said aluminium plate 90 by producing said plurality of aluminium scraps, and also comprise at least a fan 40, in particular provided with at least one impeller and also with at least a second duct having a first portion 24, a substantially vertical second portion 28 and a third portion 27 which connect said first portion 24 with said substantially vertical second portion 28, said first portion 24 having a first end 25 connected to said at least a fan 40 and a second end 26 connected to said third portion 27, furthermore said second end 23 of said at least one first evacuation duct 22 being completely inserted in said third portion 27, and furthermore said at least a fan 40 create an air flow which pass in said first portion 24 and then in said second portion 28 creating a depression in said third portion 27 and also in proximity of said second end 23, said depression suck the aluminium scraps in said at least one first evacuation duct 22 making the same flow from said first end 21 to said second substantially vertical portion 28 of said at least a second duct.

In this way it is possible to avoid the passing of said aluminium scraps through said at least a fan 40, so advantageously avoiding that the same wrap on its so blocking the evacuation process of the same and the milling process and at the same time avoiding that the aluminium scraps produce of a wear of said at least a fan 40 and of the blades of the same, due to the fact that the contact of the scraps with said at least a fan 40 is completely avoided.

Besides advantageously said at least a fan 40 is preferably provided with at least one filter, placed at one air inlet communicating with an external environment, and furthermore said at least a fan 40 blows air from said external environment in said at least a second duct, and in particular in said first portion 24, in said third portion 27 and in said substantially vertical second portion 28 .

Advantageously, this is so made to avoid a wear of said at least one impeller, as the passage of said aluminium scraps into said at least a fan 40 does not occur, and furthermore this even permits to place the same far from said at least one first evacuation duct 22 and from said milling system 10, making the positioning of the same very versatile and avoiding noises near the milling system 10.

A further advantage is that in this way also the maintenance of said at least a fan 40 and of said suction means of the aluminium scraps is reduced at a minimum.

Advantageously, the presence of said substantially vertical second portion 28 permits to recover a lubricant fluid present on the aluminium scraps, so avoiding that the same be burnt during a subsequent melting of said plurality of rough aluminium plates, producing polluting emissions and also avoiding that the same be emitted and nebulized in the external environment, by polluting the same.

In particular said second end 23 of said at least one first evacuation duct 22 is substantially coaxial with said second substantial vertical portion 28 of said at least a second duct.

This permits a better sucking efficiency of said at least a fan 40.

Preferably said suction means 20 comprise recovery means of a lubricant fluid which is present on the aluminium scraps, said recovery means 45 of the lubricant being preferably connected with a bottom portion of said third portion 27 in which said lubricant accumulates.

In particular, said recovery means 45 of a lubricant fluid comprise a recovery duct 44 of the lubricant which is connected by means of an opening valve 46 with a bottom portion of said third portion 27 of said at least a second duct.

Advantageously, this permits to periodically recover said lubricant fluid, in order to bring afterwards the same to a disposal system, and it also permits to avoid that the same accumulates in said third portion 27 reducing the sucking ability of the aluminium scraps.

Preferably in proximity of said second end 23 of at least one first evacuation duct 22, said third portion 27 has a substantial converging and diverging profile, which is then linked with said second portion 28 of said at least a second duct in order to increase the sucking effect of the aluminium scraps that is determined by a depression in said portion 27 which is caused by said air flow pushed by said at least a fan 40 into said at least a second duct.

Advantageously, this permits to maximize the ability of sucking of the aluminium scraps, with the same power of said at least a fan 40.

Preferably said first portion 24 of said at least a second duct is substantially orthogonal to said at least one first evacuation duct 22 of the aluminium scraps.

Preferably said second portion 28 is connected with said at least one feeding duct 29 of the aluminium scraps.

Preferably said milling system 10 comprises a frontal mill 12 able to smooth said aluminium plate 90 producing said plurality of aluminium scraps.

Therefore, it has been shown that a milling system for aluminium plates to be rolled according to the present invention reaches the purpose previously pointed out.

The milling system so conceived for aluminium plates to be rolled of the present invention, is susceptible of various changes and variants, all within the same inventive concept.

Furthermore, in practice the used materials and also their sizes and components could be of any kind according to the technical needs.

## Claims

1. A milling system (10) for aluminium plates (90) to be rolled, able to smooth an aluminium plate (90) obtained by means of a metallurgical process, in order to subsequently roll the same to obtain aluminium coils, said milling system (10) producing aluminium scraps during said smoothing operation, said milling system (10) comprising sucking means (20) of the aluminium scraps and compaction means (50) of the aluminium scraps, **characterized in that** said compaction means (50) of the aluminium scraps comprise at least one pair of rolling rolls (60) able to plastically deform the aluminium scraps, in order to plastically deform and transform them in a single rough tape made of mutually aggregated aluminium scraps, which is easy to cut and transport.

2. The milling system (10) according to claim 1, **characterized in that** it comprises a rotary transversal shears (65) coupled with said at least one pair of rolling rolls (60) and positioned in series with the same, said rotary transversal shears (65) being able to cut and separate said single rough aluminium tape in a plurality of rough aluminium plates, compact and easily movable.

3. The milling system (10) according to claim 1 or 2, **characterized in that** said compaction means (50) comprise a collecting box (52) of the aluminium scraps, provided with an upper opening (53) in which at least one feeding duct (29) of the aluminium scraps is partially inserted and from which said aluminium scraps come out.

4. The milling system (10) according to claim 3, **characterized in that** said collecting box (52) comprises a tapered portion (54) of a side wall and having a second opening (55) substantially orthogonal to said longitudinal direction (92) which is also positioned in proximity of said at least two rolling rolls (60).

5. The milling system (10) according to claim 3 or 4, **characterized in that** said collecting box (52) comprises at least two conveying augers (57) and (58) coupled and positioned side by side near a bottom portion (56) of said collecting box (52), furthermore said at least two conveying augers (57) and (58) rotating in an opposite way one with respect to the other, and furthermore each of said at least two conveying augers (57) and (58) rotating respect to a corresponding axis which is substantially parallel to said longitudinal direction (92).

6. The milling system (10) according to claim 5, **characterized in that** said at least two conveying augers (57) and (58) have a variable diameter, which in particular reduces itself moving towards said second opening (55), and they have also respectively a variable-pitch propeller wrapping on each respective conveying auger according to the correspondent rotation direction of the same, in order to push said aluminium scraps towards said second opening (55) and at the same time to make a first compaction of said aluminium scraps coming from said at least one feeding duct (29) of the scraps.

7. The milling system (10) according to claim 5 or 6, **characterized in that** said bottom portion (56) has a section orthogonal to said longitudinal direction (92) which is substantially "3"-shaped and has also a protuberance substantially cusp-shaped extending in said collecting box (52) along a direction substantially parallel to said longitudinal direction (92).

8. The milling system (10) according to any of claims 5 to 7, **characterized in that** said bottom portion (56) comprises a first housing (56a) and a second housing (56b) respectively for said at least two conveying augers (57) and (58).

9. The milling system (10) according to any of claims 1 to 8, **characterized in that** it comprises control and actuation electronic means (80) which are connected to said at least one pair of rolling rolls (60), to said rotary transversal shears (65) and to said at least two conveying augers (57) and (58), and comprising a plurality of force transducers connected with said at least two conveying augers (57) and (58) and with said control and actuation electronic means (80).

10. The milling system (10) according to claim 9, **characterized in that** said control and actuation electronic means (80) vary the rotation speed and the distance among the rolls of said at least one pair of rolling rolls (60) and they also vary the rotation speed of said rotary transversal shears (65) and also the rotation speed of said at least two conveying augers (57) and (58) maintaining a constant and uniform compaction level of said single rough aluminium tape and consequently also of said plurality of rough aluminium plates.

11. The milling system (10) according to any of claims 1 to 10, **characterized in that** said suction means (20) of the aluminium scraps comprise at least a one first evacuation duct (22) of the aluminium scraps having a second end (23) and a first end (21) positioned in proximity of a frontal mill (12) able to smooth said aluminium plate (90) by producing said plurality of aluminium scraps, and they also comprise at least a fan (40) in particular provided with at least one impeller and also with at least a second duct having a first portion (24), a second substantially vertical portion (28) and a third portion (27) which connects said first portion (24) with said second substantially vertical portion (28), said first portion (24) having a first end (25) connected to said at least a fan (40) and a second end (26) connected to said third portion (27), furthermore said second end (23) of said at least one first evacuation duct (22) being completely inserted in said third portion (27) and furthermore said at least a fan (40) create an air flow which pass in said first portion (24) and then in said second portion (28) creating a depression in said third portion (27) and also in proximity of said second end (23), said depression suck the aluminium scraps in said at least one first evacuation duct (22) making the same flow from said first end (21) to said second substantially vertical portion (28) of said at least a second duct.

12. The milling system (10) according to any of claims 1 to 11, **characterized in that** said sucking means (20) comprise recovery means of a lubricant fluid which is present on the aluminium scraps, said recovery means (45) of the lubricant being preferably linked to a bottom portion of said third portion (27) in which said lubricant accumulates.

13. The milling system (10) according to claim 12, **characterized in that** said recovery means (45) of a lubricant fluid comprise a recovery duct (44) of the lubricant linked by means of an opening valve (46) to a bottom part of said third portion (27) of said at least a second duct.

14. The milling system (10) according to any of claims 11 to 13, **characterized in that** in proximity of said second end (23) of at least one first evacuation duct (22), said third portion (27) has a substantially converging and diverging profile, which is then connected with said second portion (28) of said at least a second duct in order to increase the sucking effect of the aluminium scraps that is determined by a depression in said portion (27) which is caused by said air flow that is determined by said at least a fan (40), furthermore said second end (23) of said at least one first evacuation duct (22) being substantially coaxial with said second portion (28) of said at least a second duct.

15. The milling system (10) according to claim 1, **characterized in that** it comprises a frontal mill (12) able to smooth said aluminium plate (90) by producing said plurality of aluminium scraps.
